# EUROPÄISCHE PATENTSCHRIFT

(11) **EP 0 630 343 B1**
(45) Veröffentlichungstag und Bekanntmachung des Hinweises auf die Patenterteilung: **24.01.1996**
(21) Anmeldenummer: 93920528.2
(22) Anmeldetag: 16.03.1993
(51) Int. Cl.: B65D 71/00, B65D 85/02

(54) **STAPEL MIT AUF EINER VERPACKUNG AUFGEREIHTEN RING- ODER RINGSCHEIBENFÖRMIGEN TEILEN MIT RADIALSCHLITZ**
STACK OF RING-SHAPED OR DISK-SHAPED PARTS WITH RADIAL SLOT SLID ON A PACKAGING PIECE
PILE DE PIECES EN FORME D'ANNEAU OU DE RONDELLE ANNULAIRE A FENTE RADIALE RANGEES SUR UN ELEMENT DE CONDITIONNEMENT

(30) Priorität: 18.03.1992 DE 4208589
(43) Veröffentlichungstag der Anmeldung: 28.12.1994
(73) Patentinhaber: HUGO BENZING KG, D-70825 Korntal-Münchingen (DE)
(72) Erfinder: GEIGER, Hans-Peter, D-7015 Korntal-Münchingen (DE)
(74) Vertreter: Fleck, Hermann-Josef, Dr.-Ing.
(86) Internationale Anmeldenummer: EP9300612
(87) Internationale Veröffentlichungsnummer: WO9318985

(56) Entgegenhaltungen:
- DE-A- 1 265 078
- DE-U- 7 234 344
- GB-A- 821 955
- GB-A- 943 152
- US-A- 3 279 591

## Beschreibung

Die Erfindung betrifft einen Stapel mit ring- oder ringscheibenförmigen und mit einem Radialschlitz versehenen Teilen, wie Sicherungsringe oder dgl., die auf einer in die Innenaufnahme der Teile eingeführten Verpackung mit gleich ausgerichteten Radialschlitzen aufgereiht sind, wobei die Verpackung ein über die Länge des Stapels reichendes Ausrichtelement aufweist, das mittels eines damit fest verbundenen Stützelements in den ausgerichteten Radialschlitzen gehalten ist und wobei sich das Stützelement an der Innenaufnahme der Teile abstützt und die Verpackung an einem stirnseitigen Ende mit Anlageelementen versehen ist, an denen sich das zugekehrte Teil des Stapels flächig anlegt.

Stapel dieser Art sind durch die GB-A-821 955 und das DE-U-72 34 344 bekannt.

Bei diesem bekannten Stapel ist die Verpackung unverstellbar und unverdrehbar in der Innenaufnahme der aufgereihten Teile gehalten. Hat die Innenaufnahme der Teile eine kreisförmige Kontur ohne Absätze, dann wird ein Stützelement verwendet, das sich bündig an die Kontur der Innenaufnahme anlegt. Dies bedingt ein massives Stützelement und damit auch eine massive Verpackung, die in der Regel als entsprechender Profilabschnitt ausgebildet und entsprechend hergestellt wird. Diese Ausgestaltung der Verpackung mag für Teile mit kleinen Abmessungen noch wirtschaftlich sein, für große, schwere Teile ist eine derartige Ausgestaltung der Verpackung nicht mehr wirtschaftlich, da sie zum einen sehr teuer ist und zum anderen das Gewicht des Stapels um ein Vielfaches erhöht. Der letzt genannte Nachteil kann dadurch vermieden werden, daß der Profilabschnitt hohl ausgebildet wird, wie die GB-A-821 955 zusätzlich offenbart.

Die US-A-2,985,295 zeigt einen Stapel, bei dem die Teile in eine Folie eingebettet oder eingeschrumpft sind, wobei vor dem Schrumpf- bzw. Einbettvorgang die Ausrichtung der Teile auf einer Hilfsschiene vorgenommen werden muß. Der so ausgebildete Stapel wird auf eine Führungsschiene eines Entnahmegerätes eingesetzt, und nach Abnahme der Folie kann die Vereinzelung der Teile beginnen. Die Ausrichtung der Teile im Stapel übernimmt jedoch die Folie. Gerade diese Folie führt heute aus Umweltgründen zu Problemen. Das Abnehmen der Folie und ihre Beseitigung verteuert die Entstapelung der Teile. Außerdem nehmen diese Probleme bei Stapeln mit großen Teilen erheblich zu.

In der US-A-3 279 591 ist ein Stapel angegeben, mit dem mehrere Spulen zu einer Packung zusammengehalten werden. Diese Druckschrift zeigt jedoch keine zu stapelnden Teile mit einem Radialschlitz.

Es ist daher Aufgabe der Erfindung, einen Stapel der eingangs erwähnten Art zu schaffen, der eine leicht und billig herstellbare Verpackung verwendet, die als Mehrwegverpackung verwendet werden kann und so die Umweltprobleme vermeidet. Darüber hinaus sollen die Teile wohl ausgerichtet, jedoch aus Herstellungs- und Weiterverarbeitungsgründen begrenzt verstellbar gehalten sein.

Diese Aufgabe wird nach der Erfindung dadurch gelöst, daß das Ausrichtelement und das Stützelement Teile eines in Längsrichtung abgekanteten integralen Blechteils sind, wobei sich das Stützelement mit zwei Stützkanten symmetrisch zu den Radialschlitzen an der Innenkontur der Teile mit Spiel in Querrichtung abstützt, so daß das Ausrichtelement in den Radialschlitzen begrenzt verstellbar festgehalten ist.

Ein abgekantetes Blechteil bringt ausreichende Festigkeit, um auch schwere Teile tragen zu können und im Herstellungsverfahren der Teile schon als Träger verwendet werden zu können, wobei er insbesondere nach dem Stanz- oder Rollvorgang bei der Oberflächenbehandlung die Teile lose trägt. Von Vorteil ist dabei, daß sich die Verpackung trotz kreisförmiger Innenaufnahme nur über Stützkanten abstützt und daher den überwiegenden Teil der Innenkontur der Teile freiläßt. Bei der Entstapelung sind die Teile leicht von der Verpackung abzunehmen. Die Verpackung kann zum Hersteller der Teile zurückgegeben werden. Dies ist heute leicht auszuführen, da die Anlieferung bereits in vorgegebenen Behältnissen erfolgt, die den Weg vom Hersteller zum Anwender und wieder zurück nehmen.

Die Teile lassen sich dadurch in einfacher Weise auf der Verpackung unverlierbar festlegen, daß das andere stirnseitige Ende der Verpackung mit Aufnahmen für ein Sicherungselement versehen ist, das die auf der Verpackung aufgereihten Teile unverlierbar festlegt. Dabei ist im einfachsten Fall vorgesehen, daß die Aufnahmen als aufeinander ausgerichtete Bohrungen für einen als Sicherungselement dienenden Verschlußbolzen ausgebildet sind.

Für die Entnahme der Teile ist eine Ausgestaltung von Vorteil, die dadurch gekennzeichnet ist, daß das Ende der Verpackung mit dem Sicherungselement mit Steckelementen versehen ist, die auf Steckaufnahmen einer Weiterverarbeitungsvorrichtung abgestimmt sind. Die Teile werden dann ausgerichtet von der Verpackung auf die Weiterverarbeitungsvorrichtung übertragen.

Eine Ausgestaltung des Stapels sieht vor, daß für als Innensicherungsringe ausgebildete Teile die Verpackung als V-förmig abgekantetes Blechteil gestaltet ist, das mit seiner Biegekante in die Radialschlitze der Teile eingeführt ist, daß die Seitenschenkel mit den an die Biegekante anschließenden Abschnitten das Ausrichtelement bilden, das mit einem Paar von Stützkanten die Verstellung der Verpackung in Richtung aus den Radialschlitzen begrenzt, daß die freien Kanten der Seitenschenkel ein weiteres Paar von Stützkanten bilden, die die Verstellung der Verpackung in Richtung in den Innenraum der Teile hinein begrenzen, und daß an einem stirnseitigen Ende der Verpackung die Anlageelemente abgekantet sind. Die Verpackung ist robust und einfach und kann im Betrieb bei der Herstellung und Behandlung auch in heißen Flüssigkeiten, z.B. beim Phosphatieren, verwendet werden.

Die begrenzt verstellbare Halterung der Verpackung in dem Innenraum der aufgereihten Innensicherungsringe wird dabei dadurch erhalten, daß die Stützkanten des Ausrichtelementes an den Kanten der Radialschenkel der Teile anliegen und daß sich die Seitenschenkel mit ihren Stützkanten im Bereich des senkrecht zu den Radialschlitzen stehenden Durchmessern an der Innenkontur der Teile abstützen.

Eine Ausgestaltung sieht vor, daß die Anlageelemente sich mit gleicher Breite über die gesamte Breite der Seitenschenkel der Verpackung erstrecken, um eine eindeutige Ausrichtung der Innensicherungsringe senkrecht zur Längsrichtung der Verpackung zu erhalten.

Nach einer weiteren Ausgestaltung ist vorgesehen, daß für als Außensicherungsringe ausgebildete Teile die Verpackung ein V-förmig gebogenes Blechteil ist, bei dem im Bereich der Spitze durch teilweises Aufeinanderfalten seiner Seitenschenkel ein streifenförmiges, doppellagiges und durchgehendes Ausrichtelement gebildet ist. Durch das teilweise Aufeinanderfalten paßt das Blechteil in die schmalen Radialschlitzeder Außensicherungsringe.

Die Erfindung wird anhand von in den Zeichnungen dargestellten Ausführungsbeispielen näher erläutert. Es zeigt:
- Fig. 1: eine Teilansicht mit einem Innensicherungsring, der auf einem V-förmig gebogenen Blechteil als Verpackung aufgereiht ist,
- Fig. 2: die Verpackung nach Fig. 1 in perspektivischer Ansicht und
- Fig. 3: ein Aufnahmeteil für die Verpackung nach Fig. 2 einer Weiterverarbeitungsvorrichtung.

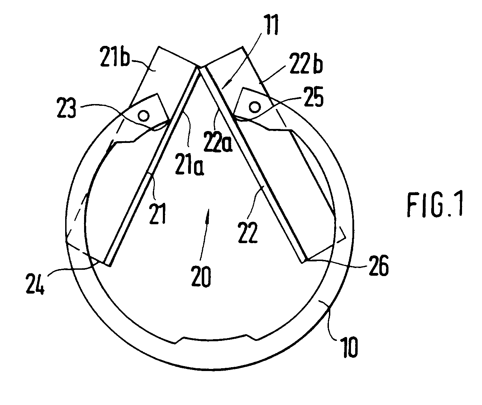

Die Teilansicht nach Fig. 1 zeigt ein als Innensicherungsring ausgebildetes Teil 10 mit einem Radialschlitz 11 und einer nahezu vollständigen kreisförmigen Innenkontur. Die in den Innenraum eingeführte Verpackung 20 ist ein V-förmig abgekantetes Blechteil mit Seitenschenkeln 21 und 22. Die freien Kanten der Seitenschenkel 21 und 22 bilden Stützkanten 24 und 26, die sich an der Innenkontur der Teile 10 so abstützt, daß die an die Biegekante anschließenden Abschnitte der Seitenschenkel 21 und 22 ein Ausrichtelement 21a, 22a bilden, das mit Stützkanten 23 und 25 an den den Radialschlitz 11 begrenzenden Kanten anliegt, wenn das Verstellspiel der Verpackung 20 in Richtung aus dem Radialschlitz 11 heraus ausgenützt ist. In der Gegenrichtung bilden die Stützkanten 24 und 26 eine Begrenzung der Verstellbewegung, so daß sichergestellt ist, daß das Ausrichtelement 21a, 22a stets im Radialschlitz 11 verbleibt. Werden die Stützkanten 24 und 26 in den Bereich des senkrecht zum Radialschlitz 11 stehenden Durchmessers der Innenkontur gelegt, dann können diese Stützkanten 24 und 26 auch die Begrenzung des Verstellweges in beiden Richtungen übernehmen. An einem Ende der Verpackung 20 sind an den Seitenschenkeln 21 und 22 Anlageelemente 21b und 22b abgekantet, die eine flächige Anlage für das zugekehrte Teil 10 des Stapels bieten. Diese Anlageelemente 21b und 22b sind einheitlich breit und erstrecken sich über die gesamte Breite der Seitenschenkel 21 und 22 der Verpackung 20.

Für die Ausgestaltung der Verpackung gibt es viele Möglichkeiten, wobei der Aufbau aber auch von der Größe der aufzureihenden Teile und deren Gewicht abhängt. Wesentlich ist stets, daß ein in die Radialschlitze der Teile eingeführtes Ausrichtelement darin nur mit Spiel verstellbar ist, was durch das im Innenraum der Teile angeordnete und mit dem Ausrichtelement fest verbundene Stützelement mit seinen Stützkanten erreicht wird.

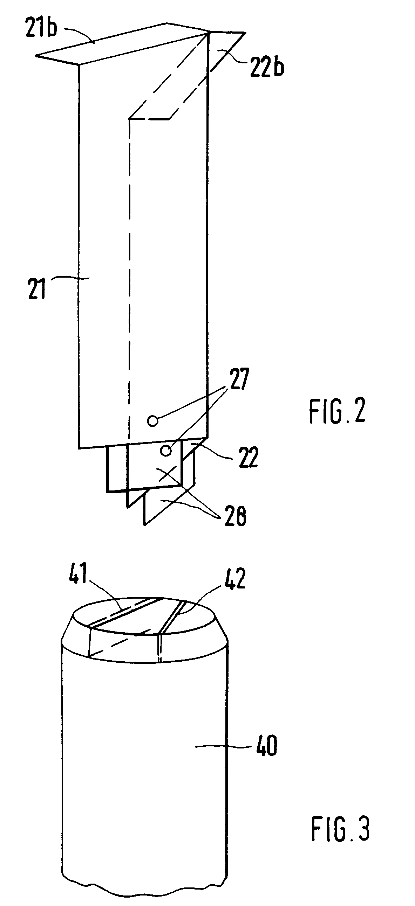

In Fig. 2 ist die Verpackung 20 der Fig. 1 in perspektivischer Ansicht gezeigt. Die Seitenschenkel 21 und 22 stehen im spitzen Winkel zueinander. Dabei ist der Winkel zwischen den Seitenschenkeln 21 und 22 und die Breite der Seitenschenkel 21 und 22 durch den Radius der Innenkontur der Teile 10 und die Breite des Radialschlitzes 11 gegeben. Die Verpackung 20 wird als Stanz-Biegeteil hergestellt, wobei die Anlageelemente 21b und 22b abgekantet werden. An dem anderen stirnseitigen Ende können sich die Seitenschenkel 21 und 22 als Steckelemente 28 fortsetzen. Auch die als Bohrungen ausgebildeten Aufnahmen 27 werden beim Stanzen hergestellt. Diese Aufnahmen 27 können einen Sicherungsbolzen aufnehmen, der die Teile 10 unverlierbar auf der Verpackung 20 festhält.

Werden die Steckelemente 28 in entsprechende Steckaufnahmen 41 und 42 einer in Fig. 3 angedeuteten Weiterverarbeitungsvorrichtung 40 eingesteckt und der Sicherungsbolzen aus den Aufnahmen 27 entfernt, dann gleiten die Teile 10 von der Verpackung 20 unter Beibehaltung ihrer Ausrichtung auf die Weiterverarbeitungsvorrichtung 40, wodurch eine erneute Ausrichtung der Teile vermieden ist, was die Handhabung der Teile mit dem Stapel auch beim Kunden vereinfacht. Nach der Entnahme der Teile 10 kann die Verpackung 20 zum Hersteller zurückgeleitet und schon während der Herstellung mit Teilen 10 neu bestückt werden.

Auch bei Außensicherungsringen kann ein V-förmig gebogenes Blechteil als Verpackung verwendet werden. Im Bereich der Spitze sind die Seitenschenkel teilweise aufeinandergefaltet, so daß ein für den schmalen Radialschlitz geeignetes streifenförmiges Ausrichtelement entsteht. Die freien Enden der Seitenschenkel bilden wieder die durchgehenden Stützkanten und halten die aufgereihten Außensicherungsringe begrenzt verstellbar, jedoch unverlierbar auf der Verpackung fest.

## Patentansprüche

1. Stapel mit ring- oder ringscheibenförmigen und mit einem Radialschlitz (11) versehenen Teilen (10), wie Sicherungsringe oder dgl., die auf einer in die Innenaufnahme der Teile (10) eingeführten Verpackung (20) mit gleich ausgerichteten Radialschlitzen (11) aufgereiht sind, wobei die Verpackung (20) ein über die Länge des Stapels reichendes Ausrichtelement (21a, 22a) aufweist, das mittels eines damit fest verbundenen Stützelements in den ausgerichteten Radialschlitzen (11) gehalten ist und wobei sich das Stützelement an der Innenaufnahme der Teile (10) abstützt und die Verpackung (20) an einem stirnseitigen Ende mit Anlageelementen (21b, 22b) versehen ist, an denen sich das zugekehrte Teil (10) des Stapels flächig anlegt,
dadurch gekennzeichnet,
daß das Ausrichtelement (21a, 22a) und das Stützelement Teile eines in Längsrichtung abgekanteten integralen Blechteils sind, wobei sich das Stützelement mit zwei Stützkanten (24, 26) symmetrisch zu den Radialschlitzen (11) an der Innenkontur der Teile (10) mit Spiel in Querrichtung abstützt, so daß das Ausrichtelement (21a) in den Radialschlitzen (11) begrenzt verstellbar festgehalten ist.

2. Stapel nach Anspruch 1,
dadurch gekennzeichnet,
daß das andere stirnseitige Ende der Verpackung (20) mit Aufnahmen (27) für ein Sicherungselement versehen ist, das die auf der Verpackung (20) aufgereihten Teile (10) unverlierbar festlegt.

3. Stapel nach Anspruch 2,
dadurch gekennzeichnet,
daß die Aufnahmen (27) als aufeinander ausgerichtete Bohrungen für einen als Sicherungselement dienenden Verschlußbolzen ausgebildet sind.

4. Stapel nach einem der Ansprüche 1 bis 3,
dadurch gekennzeichnet,
daß das Ende der Verpackung (20) mit dem Sicherungselement mit Steckelementen (28) versehen ist, die auf Steckaufnahmen (41,42) einer Weiterverarbeitungsvorrichtung (40) abgestimmt sind.

5. Stapel nach einem der Ansprüche 1 bis 4,
dadurch gekennzeichnet,
daß für als Innensicherungsringe ausgebildete Teile (10) die Verpackung (20) als V-förmig abgekantetes Blechteil gestaltet ist, das mit seiner Biegekante in die Radialschlitze (11) der Teile (10) eingeführt ist,
daß die Seitenschenkel (21,22) mit den an die Biegekante anschließenden Abschnitten das Ausrichtelement (21a, 22a) bilden, das mit einem Paar von Stützkanten (23,25) die Verstellung der Verpackung (20) in Richtung aus den Radialschlitzen (11) begrenzt,
daß die freien Kanten der Seitenschenkel (21,22) ein weiteres Paar von Stützkanten (24,26) bilden, die die Verstellung der Verpackung (20) in Richtung in den Innenraum der Teile (10) hinein begrenzen, und
daß an einem stirnseitigen Ende der Verpackung (20) die Anlageelemente (21b, 22b) abgekantet sind.

6. Stapel nach Anspruch 5,
dadurch gekennzeichnet,
daß die Stützkanten (23,25) des Ausrichtelementes (21a, 22a) an den Kanten der Radialschenkel (11) der Teile (10) anliegen und
daß sich die Seitenschenkel (21,22) mit ihren Stützkanten (24,26) im Bereich des senkrecht zu den Radialschlitzen (11) stehenden Durchmessern an der Innenkontur der Teile (10) abstützen.

7. Stapel nach Anspruch 5 oder 6,
dadurch gekennzeichnet,
daß die Anlageelemente (21b, 22b) sich mit gleicher Breite über die gesamte Breite der Seitenschenkel (21,22) der Verpackung (20) erstrecken.

8. Stapel nach einem der Ansprüche 1 bis 4,
dadurch gekennzeichnet,
daß für als Außensicherungsringe ausgebildete Teile die Verpackung ein V-förmig gebogenes Blechteil ist, bei dem im Bereich der Spitze durch teilweises Aufeinanderfalten seiner Seitenschenkel ein streifenförmiges, doppellagiges und durchgehendes Ausrichtelement gebildet ist.

## Claims

1. Stack of annular- or annular disc-shaped component parts (10) which are provided with a radial slot (11), such as securing rings or the like, which are lined-up on a packing (20) with identically orientated radial slots (11), said packing being inserted into the inner receiving means of the component parts (10), the packing (20) having a guide element (21a, 22a), which extends over the length of the stack and is retained in the aligned radial slots (11) by means of a supporting element securely connected thereto, and the supporting element being supported on the inner receiving means of the component parts (10), and a front end of the packing (20) being provided with abutment elements (21b, 22b), against which the facing component part (10) of the stack abuts in a surface-to-surface manner, characterised in that the guide element (21a, 22a) and the supporting element are parts of an integral piece of sheet metal angled in the longitudinal direction, the supporting element being supported by two supporting edges (24, 26) symmetrically relative to the radial slots (11) on the inner contour of the component parts (10) with some clearance in the transverse direction, so that the guide element (21a) is securely retained in the radial slots (11) in a limited adjustable manner.

2. Stack according to claim 1, characterised in that the other front end of the packing (20) is provided with receiving means (27) for a securing element which non-detachably secures the component parts (10) which are lined-up on the packing (20).

3. Stack according to claim 2, characterised in that the receiving means (27) are configured as bores, which are aligned with one another, for receiving a closure pin serving as a securing element.

4. Stack according to one of claims 1 to 3, characterised in that the end of the packing (20) having the securing element is provided with insert members (28), which are adapted to recesses (41, 42) in a subsequent treatment device (40).

5. Stack according to one of claims 1 to 4, characterised in that, for component parts (10) which are configured as internal securing rings, the packing (20) is formed as a piece of sheet metal which has been angled in a V-shaped manner and is introduced by its bent edge into the radial slots (11) in the component parts (10), in that the lateral portions (21, 22) form, with the portions communicating with the bent edge, the guide element (21a, 22a) which defines with a pair of supporting edges (23, 25) the displacement of the packing (20) in a direction from the radial slots (11), in that the free edges of the lateral portions (21, 22) form an additional pair of supporting edges (24, 26), which define the displacement of the packing (20) in a direction into the interior of the component parts (10), and in that the abutment elements (21b, 22b) are angled at a front end of the packing (20).

6. Stack according to claim 5, characterised in that the supporting edges (23, 25) of the guide element (21a, 22a) abut against the edges of the radial portions (11) of the component parts (10), and in that the lateral portions (21, 22) are supported on the inner contour of the component parts (10) by their supporting edges (24, 26) in the region of the diameter lying perpendicular to the radial slots (11).

7. Stack according to claim 5 or 6, characterised in that the abutment elements (21b, 22b) extend with the same width over the entire width of the lateral portions (21, 22) of the packing (20).

8. Stack according to one of claims 1 to 4, characterised in that, for component parts which are configured as external securing rings, the packing is a piece of sheet metal which has been bent in a V-shaped manner, wherein a strip-like, double-layered and continuous guide element is formed in the region of the point by its lateral portions being partially folded over one another.

## Revendications

1. Pile de pièces (10) en forme d'anneau ou de rondelle annulaire à fente radiale (11), telles que des bagues de sécurité ou similaires, qui sont rangées sur un élément de conditionnement (20) introduit dans l'ouverture intérieure des pièces, élément de conditionnement présentant des fentes radiales de même orientation, l'élément de conditionnement (20) présentant un élément d'alignement (21a, 22a) couvrant toute la longueur de la pile, élément d'alignement qui au moyen d'un élément de support qui lui est solidaire est maintenu dans les fentes radiales (11) de même orientation, l'élément de support s'étayant sur le contour intérieur des pièces (10) et l'élément de conditionnement (20) étant à son extrémité frontale muni d'éléments d'application (21b, 22b), contre lesquels s'applique à plat la pièce (10) en regard de la pile,
caractérisée
en ce que l'élément d'alignement (21a, 22a) et l'élément de support font partie intégrante d'une pièce en tôle coudée en direction longitudinale, l'élément de support s'appuyant par deux arêtes de support (24, 26) symétriquement aux fentes radiales (11) sur le contour intérieur des pièces (10), avec du jeu en direction transversale, de telle sorte que l'élément d'alignement (21a) est maintenu dans les fentes radiales (11) avec une possibilité de réglage limitée.

2. Pile suivant la revendication 1,
caractérisée
en ce que l'autre extrémité frontale de l'élément de conditionnement (20) présente des logements (27) pour un élément de sécurité, lequel bloque à l'abri de la perte les pièces (10) rangées sur l'élément de conditionnement (20).

3. Pile suivant la revendication 2,
caractérisée
en ce que les logements (27) ont la forme de forures mutuellement alignées pour un boulon de d'obturation servant d'élément de sécurité.

4. Pile suivant l'une quelconque des revendications de 1 à 3,
caractérisée
en ce que l'extrémité de l'élément de conditionnement (20) avec l'élément de sécurité est doté d'éléments d'enfichage (28) qui sont adaptés à des logements d'enfichage (41, 42) d'un dispositif de transformation (40) subséquent.

5. Pile suivant l'une quelconque des revendications de 1 à 4,
caractérisée
en ce que pour des pièces (10) ayant la forme de bagues de sécurité intérieures, l'élément de conditionnement (20) a la forme d'une pièce en tôle cintrée en V, dont l'arête de cintrage est introduite dans les fentes radiales (11) des pièces (10),
en ce que les ailes latérales (21, 22) avec les tronçons raccordés à l'arête de cintrage constituent l'élément d'alignement (21a, 22a), lequel avec une paire d'arêtes de support (23, 25) limite la gamme de réglage de l'élément de conditionnement (20) dans la direction des fentes radiales (11)
en ce que les arêtes libres des ailes latérales (21, 22) constituent une paire supplémentaire d'arêtes de support (24, 26), lesquelles limitent la liberté de réglage de l'élément de conditionnement (20) en direction de l'enceinte intérieure des pièces (10), et
en ce qu'à une extrémité frontale de l'élément de conditionnement (20), les éléments d'application (21b, 22b) sont coudés.

6. Pile suivant la revendication 5,
caractérisée
en ce que les arêtes de support (23, 25) de l'élément d'alignement (21a, 22a) s'appliquent contre les arêtes des ailes radiales (11) des pièces (10),
en ce que dans la région des diamètres perpendiculaires aux fentes radiales (11), les ailes latérales (21, 22) s'appliquent par leurs arêtes de support (24, 26) contre le contour intérieur des pièces (10).

7. Pile suivant la revendication 5 ou la revendication 6,
caractérisée
en ce que les éléments d'application (21b, 22b) s'étendent avec une largeur constante sur toute la largeur des ailes latérales (21, 22) de l'élément de conditionnement (20).

8. Pile suivant l'une quelconque des revendications de 1 à 4,
caractérisée
en ce que pour des pièces en forme de bagues de sécurité extérieures, l'élément de conditionnement est une pièce en tôle cintrée en V, au sommet de laquelle, par un pliage partiel l'une sur l'autre de ses ailes latérales, il est formé un élément d'alignement continu à double pli en forme de ruban.
